# EUROPEAN PATENT APPLICATION

(11) **EP 3 034 222 A1**
(43) Date of publication of application: **22.06.2016**
(21) Application number: 15200065.9
(22) Date of filing: 15.12.2015
(51) Int. Cl.: B23H 1/10, B23H 11/00, B08B 3/02

(54) **ELECTRIC DISCHARGE MACHINE**

(30) Priority: 15.12.2014 JP 2014253456
(71) Applicant: FANUC CORPORATION, Oshino-mura Minamitsuru-gun Yamanashi 401-0597 (JP)
(72) Inventor: YOSHIZAKI, Daisuke, Minamitsuru-gun, Yamanashi 401-0597 (JP)
(74) Representative: Ward, James Norman

(57) **Abstract**

An electric discharge machine machines a workpiece by immersing the workpiece in machining fluid or by ejecting the machining fluid to the workpiece. The electric discharge machine includes: a cleaning device configured to inject the machining fluid or cleaning fluid; a robot device configured to move an injection nozzle of the cleaning device; a robot control device configured to control the robot device; and a control device configured to control the cleaning device.

## Description

### BACKGROUND OF THE INVENTION

### 1. Field of the Invention

The present invention relates to an electric discharge machine. Specifically, the present invention relates to an electric discharge machine having a function to clean the inside of a machining tank.

### 2. Description of the Related Art

The electric discharge machine is a machine tool for machining a workpiece by generating an electric discharge between a tool electrode and the workpiece. The tool electrode includes, for example, a wire electrode. The workpiece is machined while the workpiece is immersed in machining fluid. Alternatively, the workpiece is machined while the machining fluid is ejected to the workpiece. Therefore, electric discharge machining is performed in a machining tank.

Machining chips are produced during the electric discharge machining. The machining chips contaminating the machining fluid stick to each part inside the machining tank. If the machining chips stuck to the machining tank are left as they are, a variety of accuracy deterioration and machine trouble may be caused. For example, the machining chips fixed to a workpiece table may deteriorate fixing accuracy of the workpiece. Furthermore, the machining chips fixed to a sealing part of the machining tank may increase a load on the sealing part, or cause water leakage. Therefore, a cleaning operation inside the machining tank is essential for using the electric discharge machine continuously.

JP 2009-255223 A discloses a technique to clean off the machining chips in a composite machining device having a machining tank which is used in common for water jet machining and wire-cut electric discharge machining. Specifically, the machining tank is provided with a water channel. An opening is provided in the water channel so as to supply water to the water channel. The water in the water channel flows down along an inner wall surface of a tank wall of the machining tank so as to clean off the machining chips. However, since the water channel is required to be provided in the machining tank, the device becomes complicated and large.

Conventionally, the inside of the machining tank is cleaned by using a cleaning device, in which the machining fluid is pumped by a pump from a machining fluid tank provided in the electric discharge machine so that the machining fluid is ejected from a cleaning gun. A user of the electric discharge machine operates the cleaning gun to eject the machining fluid, by which contamination due to, for example, the machining chips stuck to each part inside the machining tank is cleaned off, thereby preventing the machine trouble and the accuracy deterioration caused by the contamination in the machining tank.

However, this cleaning operation always requires manual labor, thereby imposing a burden on the user. Although the electric discharge machining has been automated in recent years, as long as the cleaning inside the machining tank requires the manual labor, automatic machining cannot be performed continuously. Therefore, one of the problems in automating the electric discharge machining is to automate the cleaning operation of the electric discharge machine. Thus, if the cleaning operation inside the machining tank can be automated, the burden on an operator will be reduced, thereby enhancing the automation of the electric discharge machining.

### SUMMARY OF THE INVENTION

In consideration of these problems, an object of the present invention is to provide an electric discharge machine employing an automated cleaning operation by having a robot system for cleaning the inside of a machining tank. The robot system is synchronized with the electric discharge machine.

An electric discharge machine according to an embodiment of the present invention machines a workpiece by immersing the workpiece in machining fluid or by ejecting the machining fluid to the workpiece, the electric discharge machine including: a cleaning device configured to inject the machining fluid or cleaning fluid; a robot device configured to move an injection nozzle of the cleaning device; a robot control device configured to control the robot device; and a control device configured to control the cleaning device.

The control device may include a robot motion recognition part configured to acquire and recognize motion or position information of the robot device from the robot control device; a storage device configured to store a pressure condition or a flow rate condition of the machining fluid or the cleaning fluid corresponding to the motion or position information of the robot device; a cleaning fluid pressure determination part configured to determine a pressure or a flow rate of the machining fluid or the cleaning fluid based on the motion or position information of the robot device, and on the condition stored in the storage device; and a cleaning fluid pressure adjusting device configured to adjust the cleaning fluid, to be injected by the cleaning device, to the pressure or the flow rate of the machining fluid or the cleaning fluid determined by the cleaning fluid pressure determination part, and the control device may adjust the pressure or the flow rate of the cleaning fluid in accordance with a place to be cleaned.

The control device may include a position driving part capable of driving a position of an electrode supporting part that supports an electrode configured to perform electric discharge machining; a robot motion recognition part; a storage device configured to store a position condition of the electrode supporting part corresponding to a motion of the robot device; and a position determination part configured to determine the position of the electrode supporting part based on the motion information of the robot device obtained from the robot motion recognition part, and on the condition read from the storage device, the position determination part being provided in the control device configured to control the position driving part, and the control device may be synchronized with the motion of the robot device so as to move a machining tank or the electrode supporting part.

The robot control device may include a machining tank recognition part configured to recognize a state inside the machining tank from information obtained from a water level detection device configured to detect a water level of the machining fluid inside the machining tank; a cleaning determination part configured to determine whether automatic cleaning is to be started based on information obtained from the machining tank recognition part; and a cleaning preparation command part configured to command the control device to discharge the machining fluid from the machining tank based on a content determined by the cleaning determination part, and the robot control device may determine whether the machining fluid is stored in the machining tank before an automatic cleaning operation is started, and when stored, the automatic cleaning is performed after discharging the machining fluid.

The present invention including the above-mentioned configuration has a robot system synchronized with the electric discharge machine for cleaning the inside of the machining tank. Therefore, the present invention can provide the electric discharge machine employing the automated cleaning operation.

### BRIEF DESCRIPTION OF THE DRAWINGS

The above-mentioned and other objects and characteristics of the present invention will be clarified by the following description of examples with reference to the accompanying drawings, wherein:
FIG. 1 is a view illustrating an electric discharge machine having a cleaning system by a robot;
FIG. 2 is a view illustrating an exemplary embodiment of a robot device equipped with an injection nozzle of a cleaning device;
FIG. 3 is a block diagram of the electric discharge machine having the cleaning system by the robot;
FIG. 4 is a flowchart illustrating a control flow in the electric discharge machine having the cleaning system by the robot;
FIG. 5 is a functional block diagram of control in the electric discharge machine having the cleaning system by the robot;
FIG. 6 is a flowchart describing a motion of an example;
FIG. 7 is a functional block diagram of control; and
FIG. 8 is a flowchart describing a motion of an example.

### DETAILED DESCRIPTION OF THE PREFERRED EMBODIMENTS

### <First Embodiment>

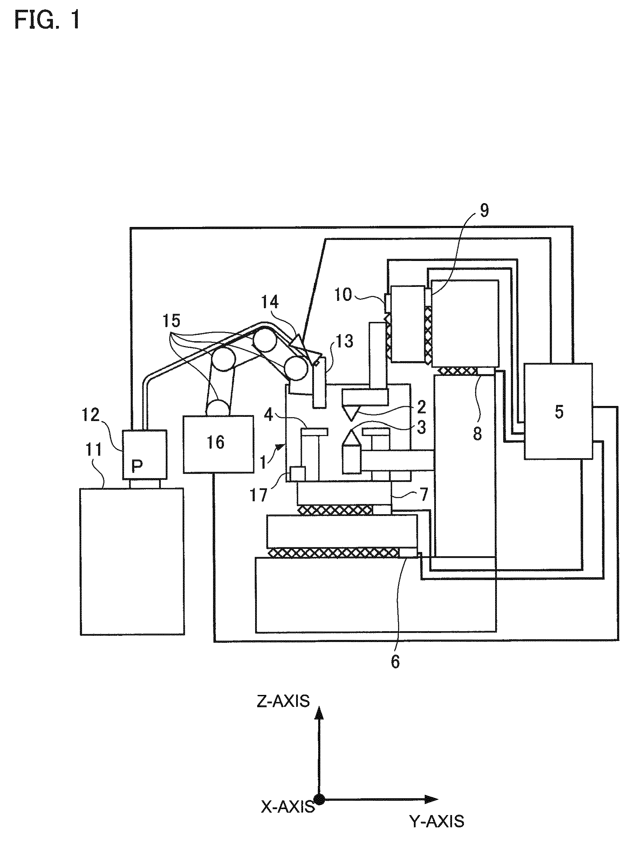

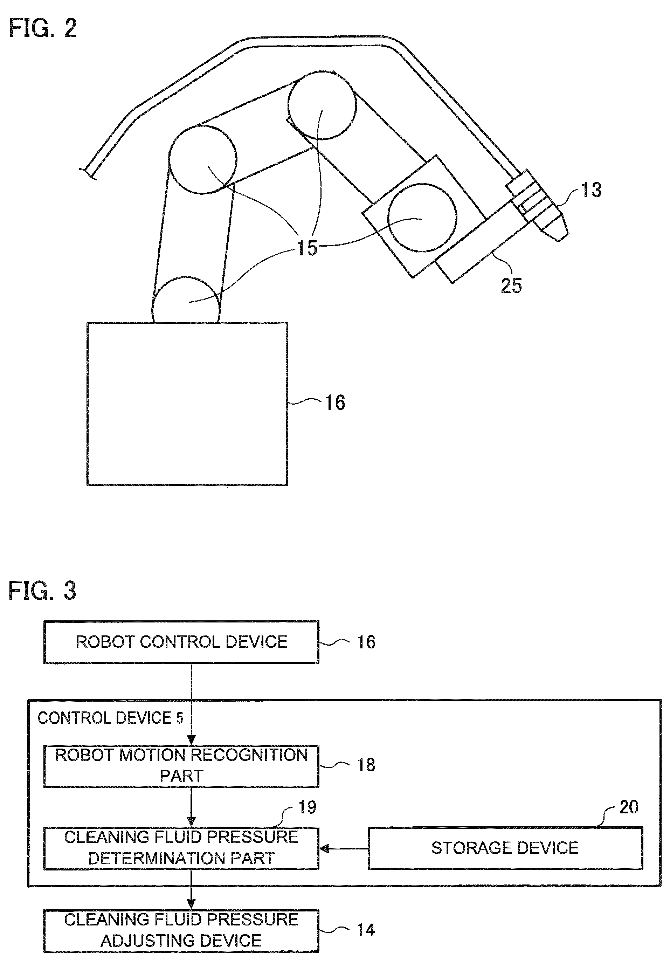

FIG. 1 is a view illustrating an electric discharge machine according to an embodiment of the present invention. FIG. 2 is a view illustrating an exemplary embodiment of a robot device equipped with an injection nozzle of a cleaning device. FIG. 1 is the view illustrating the electric discharge machine having a cleaning system by a robot. Although a wire electric discharge machine is exemplified in the first embodiment, this embodiment is applicable to any machining device as long as it is an electric discharge machine. The same shall apply to the other embodiments.

The electric discharge machine includes a machining tank 1 for immersing a workpiece in machining fluid. The machining tank 1 is provided with electrode supporting parts 2, 3 and a workpiece table 4. The electrode supporting parts 2, 3 support a wire electrode for machining. The workpiece table 4 fixes the workpiece thereon. Position driving parts 6, 7, 8, 9, 10 are driven by a control device 5 with position control. The position driving parts 6, 7, 8, 9, 10 control positions of the wire electrode and the workpiece mounted on the workpiece table 4. Some electric discharge machines are configured to machine the workpiece by ejecting the machining fluid to a part to be machined.

The position driving part 6 is a Y-axis driving part, which moves the machining tank 1 in a direction parallel and lateral to a paper surface together with an X-axis driving part. The position driving part 7 is the X-axis driving part, which moves the machining tank 1 in a direction vertical to the paper surface. The position driving part 8 is a V-axis driving part, which moves the upper electrode supporting part 2 in a direction parallel to a Y-axis together with a U-axis driving part and a Z-axis driving part. The position driving part 9 is the U-axis driving part, which moves the upper electrode supporting part 2 in a direction parallel to an X-axis together with the Z-axis driving part. The position driving part 10 is the Z-axis driving part, which moves the upper electrode supporting part 2 in a direction parallel and longitudinal to the paper surface.

A cleaning device is a device to pump the machining fluid by a pump 12 from a tank 11 in which the machining fluid is stored. The cleaning device then ejects the machining fluid from a cleaning fluid injection nozzle 13. The ejection can be controlled by controlling the pump 12 with the control device 5. Instead of the machining fluid, fluid having a higher cleaning effect may be used as cleaning fluid.

The robot device includes a robot driving part 15. A robot arm can be operated freely by driving the robot driving part 15. A motion of the robot device is controlled by a robot control device 16 giving a position command to the robot driving part 15. The robot device may include the cleaning fluid injection nozzle 13 of the cleaning device.

FIG. 2 is the view illustrating the exemplary embodiment of the robot device equipped with the injection nozzle of the cleaning device.

As illustrated in FIG. 2, a distal end of the robot device includes a robot hand 25 for attaching the cleaning fluid injection nozzle 13. When the robot control device 16 gives a command, a position and a direction of the cleaning fluid injection nozzle 13 can be moved.

As a result, the controlled robot device can freely move the cleaning fluid injection nozzle 13 so as to eject the machining fluid into the machining tank 1. Therefore, a cleaning operation inside the machining tank 1 can be automated.

### <Second Embodiment>

The machining fluid ejected from the cleaning device might cause problems if the cleaning operation is performed without adjusting a pressure of the machining fluid. For example, when cleaning an upper part of the machining tank 1, the machining fluid with a high pressure might be scattered outside the machining tank 1. In addition, when cleaning the workpiece table 4, the machining fluid with too low a pressure might not remove contamination. In order to solve these problems, there is a need for a function to adjust the pressure of the cleaning fluid appropriately in accordance with a place to be cleaned.

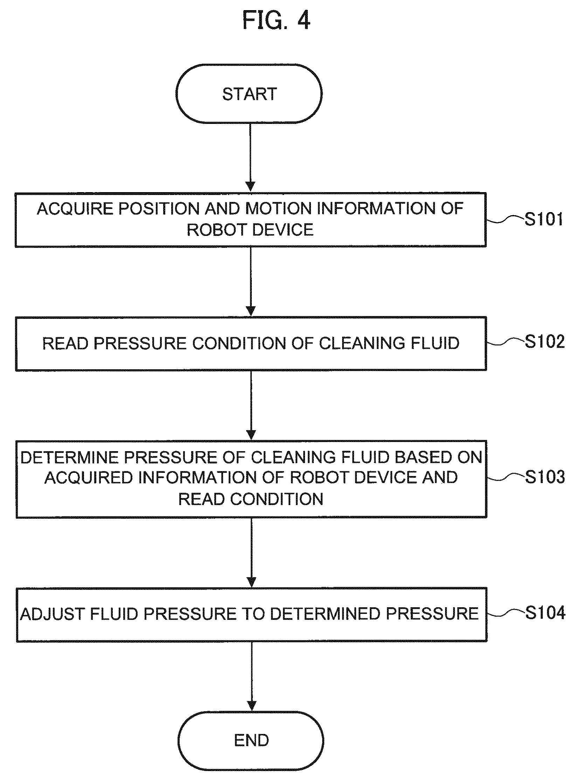

In this regard, the second embodiment of the present invention will be described with reference to FIGS. 1, 3, and 4. FIG. 3 is a functional block diagram of control according to the second embodiment of the present invention. FIG. 4 is a flowchart describing a motion of the second embodiment. Configurations which are the same as or similar to those in FIG. 1 will be described by using the same reference signs.

When the robot control device 16 transmits motion information of the robot device to a robot motion recognition part 18 in the control device 5, the robot motion recognition part 18 acquires position and motion information of the robot device (S101). A condition of a cleaning fluid pressure stored in a storage device 20 is read (S102). Then, a cleaning fluid pressure determination part 19 determines the pressure of the cleaning fluid based on the motion information of the robot device acquired in S101 (S103). The cleaning fluid pressure determination part 19 commands a cleaning fluid pressure adjusting device 14 to adjust the fluid pressure to the determined pressure (S104).

As a result, in order to prevent the cleaning fluid from being scattered outside the machining tank 1, for example, when a cleaning fluid ejection position exceeds a predetermined height of the machining tank 1, the cleaning fluid pressure determination part 19 can command the cleaning fluid pressure adjusting device 14 to reduce the pressure of the fluid to be ejected.

Therefore, as already mentioned, this system can prevent the machining fluid from being scattered outside the machining tank 1. Furthermore, for example, by using this system and storing the condition in the storage device 20, the workpiece table 4 can be cleaned with high-pressure fluid. Thus, the pressure of the machining fluid to be ejected from the cleaning device can be adjusted in accordance with the place to be cleaned by the robot device.

### <Third Embodiment>

The inside of the machining tank 1 is not formed to have a simple box shape. Rather, many obstacles to the operation of the robot device are arranged in the machining tank, including the workpiece table 4 and the electrode supporting parts 2, 3. Therefore, if the robot device alone is moved for the operation, some places are difficult to clean and others are not able to be cleaned. Furthermore, the cleaning operation might not be performed efficiently. In order to solve these problems, it is necessary to move the positions of the electrode supporting parts 2, 3 and the machining tank in accordance with the motion of the robot device and the place to be cleaned when the robot device performs the cleaning operation.

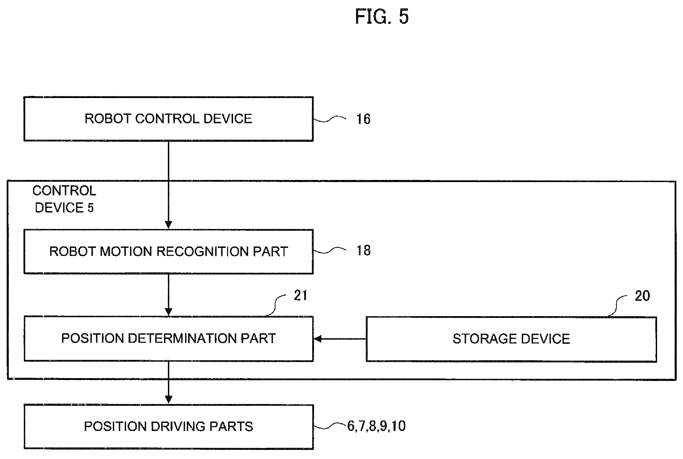

For the purpose of the explanation, reference is made to FIGS. 1, 5, and 6. Configurations which are the same as or similar to those in FIGS. 1 and 3 will be described by using the same reference signs. FIG. 5 is a functional block diagram of control according to the third embodiment of the present invention.

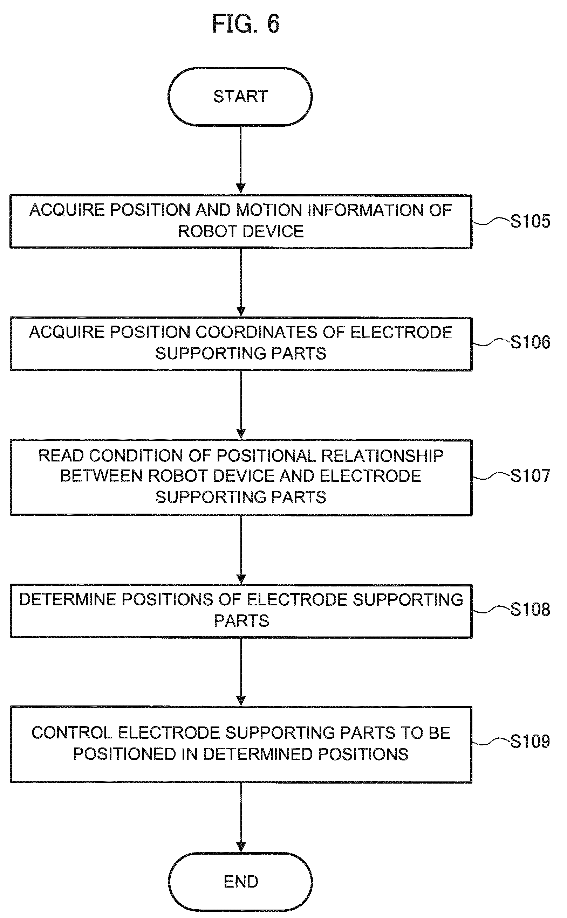

FIG. 6 is a flowchart describing a motion of the third embodiment. When the robot control device 16 transmits the motion information of the robot device to the robot motion recognition part 18 in the control device 5, the robot motion recognition part 18 acquires the position and motion information of the robot device (S105). Position information of the position driving parts 6, 7, 8, 9, 10 of the electric discharge machine is obtained from the control device 5, whereby a position determination part 21 acquires position coordinates of the electrode supporting parts 2, 3 (S106).

A condition of a positional relationship between the robot device and the electrode supporting parts 2, 3 stored in the storage device 20 is read (S107). The position determination part 21 determines the positions of the electrode supporting parts 2, 3 based on the acquired position and motion information of the robot device and the condition of the position and the positional relationship of the electrode supporting parts (S108). A result determined by the position determination part 21 is transmitted to the position driving parts 6, 7, 8, 9 for controlling the electrode supporting parts 2, 3 to be positioned in the determined positions (S109).

For example, in a case where the upper electrode supporting part 2 disturbs the cleaning of the workpiece table 4, the condition that the upper electrode supporting part should be moved upward when cleaning the workpiece table is input to the storage device 20 of the control device 5. As a result, when the robot motion recognition part 18 recognizes that the robot control device 16 gives a command to clean the workpiece table 4, the position driving part 10 can be commanded to move the upper electrode supporting part 2 upward.

The above-mentioned effect is not limited to the upper electrode supporting part 2 exemplified above. When a gap between the workpiece table 4 and the lower electrode supporting part 3 is narrow, the driving parts 6, 7 can move to create a space for enabling free movement of the robot device by inputting the condition to the storage device 20. Thus, the positions of the electrode supporting parts 2, 3 and the machining tank can be moved in accordance with the motion of the robot device and the place to be cleaned when the robot device performs the cleaning operation, whereby the automatic cleaning operation can be performed efficiently.

### <Fourth Embodiment>

If the robot device performs the cleaning operation while the machining fluid is still stored in the machining tank 1, the robot device will be immersed in the machining fluid, thereby causing machine trouble. Therefore, there is a need for a function to determine whether the machining fluid is stored in the machining tank before the robot device executes the automatic cleaning operation and, when stored, to command the control device to discharge the machining fluid.

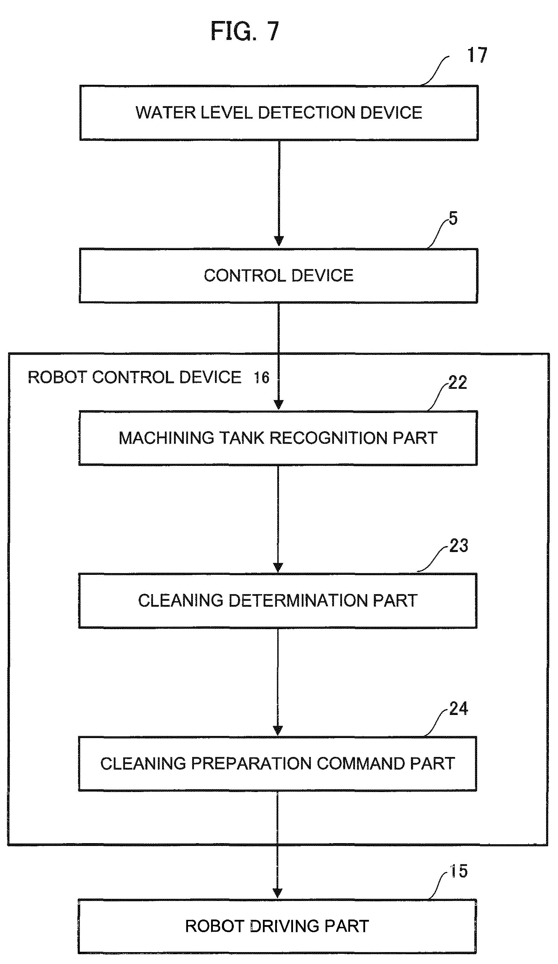

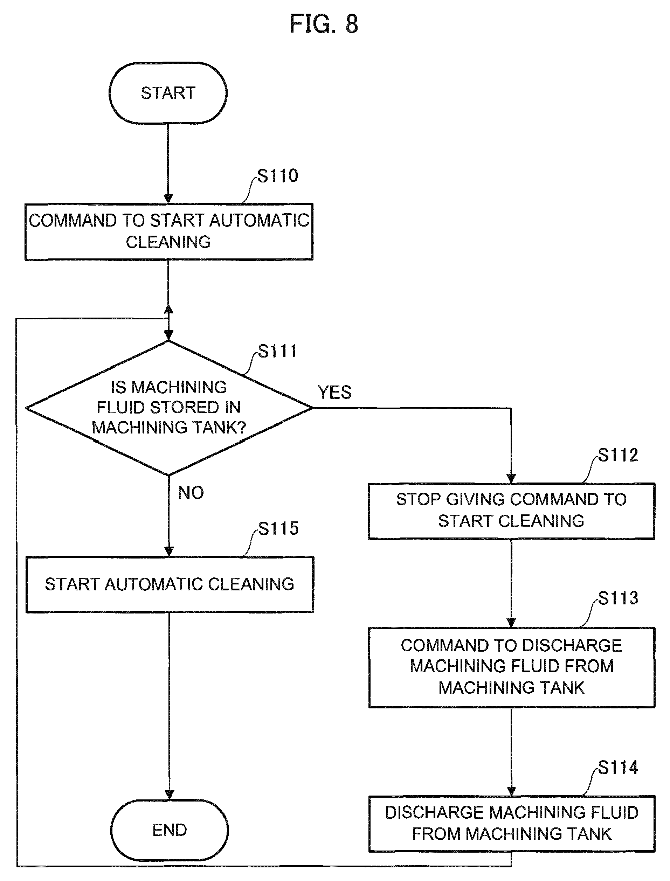

The fourth embodiment of the present invention will be described with reference to FIGS. 1, 7, and 8. Configurations which are the same as or similar to those in FIGS. 1, 3, and 5 will be described by using the same reference signs. FIG. 7 is a functional block diagram of control according to the fourth embodiment of the present invention. FIG. 8 is a flowchart describing a motion of the fourth embodiment.

When the robot device is commanded to start the automatic cleaning (S110), a machining tank recognition part 22 arranged in the robot control device receives, from the control device 5, water level information of the machining fluid in the machining tank obtained from a water level detection device 17 in the electric discharge machine so as to determine whether the machining fluid is stored in the machining tank (S111). When the machining tank recognition part 22 determines that the machining fluid is not stored in the machining tank, the automatic cleaning is started accordingly (S115). When the machining fluid is stored, a cleaning determination part 23 stops the robot control device 16 from giving a command to start the cleaning (S112). After the cleaning determination part 23 temporarily stops starting the cleaning, a cleaning preparation command part 24 commands the control device 5 to discharge the machining fluid from the machining tank (S114). After the machining fluid is discharged from the machining tank, and the machining tank recognition part 22 determines that the machining fluid no longer exists in the machining tank, the robot control device 16 is allowed to start the automatic cleaning (S115).

By utilizing this system, even if a cleaning command is transmitted to the robot control device 16 while the machining fluid is still stored in the machining tank 1, it can be determined before the robot control device 16 performs the automatic cleaning operation whether the machining fluid is stored in the machining tank, and when stored, the control device 5 of the electric discharge machine can be commanded to discharge the machining fluid.

As mentioned above, by having the cleaning system of the robot device according to an embodiment of the present invention, the cleaning inside the machining tank can be automated, thereby reducing a burden on the user.

## Claims

1. An electric discharge machine that machines a workpiece by immersing the workpiece in machining fluid or by ejecting the machining fluid to the workpiece, the electric discharge machine comprising:
a cleaning device configured to inject the machining fluid or cleaning fluid;
a robot device configured to move an injection nozzle of the cleaning device;
a robot control device configured to control the robot device; and
a control device configured to control the cleaning device.

2. The electric discharge machine according to claim 1, wherein the control device comprises:
a robot motion recognition part configured to acquire and recognize motion or position information of the robot device from the robot control device;
a storage device configured to store a pressure condition or a flow rate condition of the machining fluid or the cleaning fluid corresponding to the motion or position information of the robot device;
a cleaning fluid pressure determination part configured to determine a pressure or a flow rate of the machining fluid or the cleaning fluid based on the motion or position information of the robot device, and on the condition stored in the storage device; and
a cleaning fluid pressure adjusting device configured to adjust the cleaning fluid, to be injected by the cleaning device, to the pressure or the flow rate of the machining fluid or the cleaning fluid determined by the cleaning fluid pressure determination part, and
the control device adjusts the pressure or the flow rate of the cleaning fluid in accordance with a place to be cleaned.

3. The electric discharge machine according to claim 1, wherein the control device comprises:
a position driving part capable of driving a position of an electrode supporting part that supports an electrode configured to perform electric discharge machining;
a robot motion recognition part configured to acquire and recognize motion or position information of the robot device from the robot control device;
a storage device configured to store a position condition of the electrode supporting part corresponding to a motion of the robot device; and
a position determination part configured to determine the position of the electrode supporting part based on the motion information of the robot device obtained from the robot motion recognition part, and on the condition read from the storage device, the position determination part being provided in the control device configured to control the position driving part, and
the control device is synchronized with the motion of the robot device so as to move a machining tank or the electrode supporting part.

4. The electric discharge machine according to claim 1, wherein the robot control device comprises:
a machining tank recognition part configured to recognize a state inside the machining tank from information obtained from a water level detection device configured to detect a water level of the machining fluid inside the machining tank;
a cleaning determination part configured to determine
whether automatic cleaning is to be started based on information obtained from the machining tank recognition part; and
a cleaning preparation command part configured to command the control device to discharge the machining fluid from the machining tank based on a content determined by the cleaning determination part, and
the robot control device determines whether the machining fluid is stored in the machining tank before an automatic cleaning operation is started, and when stored, the automatic cleaning is performed after discharging the machining fluid.
